# EUROPEAN PATENT SPECIFICATION

(11) **EP 1 616 822 B1**
(45) Date of publication and mention of the grant of the patent: **23.08.2006**
(21) Application number: 04447164.7
(22) Date of filing: 06.07.2004
(51) Int. Cl.: B65G 67/60, B65G 63/00, B63B 27/16

(54) **A method and system for transferring cargo**
Verfahren und Vorrichtung zur Überführung von Fracht
Méthode et système pour le transfert des marchandises

(43) Date of publication of application: 18.01.2006
(73) Proprietor: Perpetuma, 9190 Stekene (BE)
(72) Inventor: Jegers, Jo, 2950 Kapellen (BE)
(74) Representative: Brouwer, Hendrik Rogier

(56) References cited:
- WO-A-02/34617
- US-A1- 2002 071 743
- US-A1- 2002 197 135

## Description

The present invention relates to a terminal storage system for the transfer, e.g., loading and unloading, of cargo between a container ship and trucks, railroad cars, other ships and/or temporary storage, as described in the preamble of claim 1.

More in particular the present invention relates to a terminal storage system for unloading cargo from and loading cargo onto container ships, comprising a first quay adapted to moor at least one container ship, at least one first cargo transferring device adjacent to said first quay and capable of transferring cargo from and/or to said container ship respectively to and/or from a transitional buffer zone adjacent to the first quay for temporarily storing the cargo, and at least one second cargo transferring device for transferring cargo from and/or to the buffer zone respectively to and/or from a terminal structure for storing the cargo.

There exist at present various means for unloading and/or loading ship cargo on land or offshore using for instance cranes and/or gantries for loading and removing cargo from ships.

A known system comprises a first quay adapted to moor at least one container ship. On or adjacent to the quay, at least one first cargo transferring device is provided which is capable of transferring cargo from and/or to said container ship respectively to and/or from a transitional buffer zone adjacent to the first quay for temporarily storing the cargo. Cargo, typically in the form of containers is hauled from the ship by the first cargo-transferring device, for instance a crane, and put onto the transitional buffer zone. In the known terminal storage system this transitional buffer zone is a large paved area, which may be part of the first quay, and where second cargo transferring devices are driving off and on for transferring cargo from and to the buffer zone respectively to and from a terminal area or structure for storing the cargo.

In the known system, the second cargo transferring devices are so called straddlers or straddle-carriers. These wheeled vehicles have four elongated legs between which a lifting device is positioned. The lifting device is able to pick up a container. One operator from a small control room positioned atop the four wheels operates the straddlers. After picking up a container from the pavement of the transitional buffer zone, the straddler wheels to the terminal storage area or structure to drop off the container, and returns empty to the buffer zone to pick up another container, which has been placed there by the first cargo transferring device. Due to the large dimensions of commercial cargo one straddler can at most carry two containers at a time.

A drawback of the known system is that in order to accommodate the rate of transfer of the first transferring device many straddlers are required to be able to empty the transitional buffer zone in time. This means that in normal operation the transitional buffer zone is crowded with moving straddlers. This requires a detailed and time-consuming coordination between the different straddlers. If not well coordinated, straddlers for instance frequently have to stand in line waiting. More importantly still, many accidents have been reported where straddlers collided and containers hit or crushed human beings.

Accordingly, it is a principal object of the invention to provide a terminal system for loading and unloading cargo from container ships, which enables to expediently and safely move cargo from a container ship to a terminal storage area, and to increase the total capacity and/or efficiency of loading and unloading.

Thereto the terminal storage system according to the invention has the technical features as described in the characterising portion of claim 1. More in particular the system according to the invention is characterised in that the transitional buffer zone comprises a dock, which substantially extends between the first quay and at least one second quay of the terminal structure, and which is adapted to receive the second cargo transferring device, which second cargo transferring device comprises a floating device adapted to accept cargo and float between the first and second quays.

By providing a dock between the first quay and at least one second quay of the terminal structure it turns out that an increased amount of cargo and/or containers may be transferred per unit of time from the container ship to the terminal storage area. This is surprising since floating devices generally move at a slower pace than straddlers. However since much more cargo and/or containers may be loaded onto a floating device in one time, an increased amount of cargo is transferred in one passage from the buffer zone to the terminal structure. Also, providing the dock with one or more floating devices not only dramatically increases the capacity of loading or unloading, but improves safety as well.

US 2002/071743 A1 discloses a transfer system on the open sea or at the mouth of a river. A platform container transfer terminal is provided, which may be moved intact across oceans for rapid erection in remote locations, to provide high speed loading and unloading of large container vessels to lighters or feeder vessels. Its aim is to avoid problems with landside loading/unloading operations for large vessels, by performing a cargo switch operation between these the large vessels and lighters at the remote sea location. It is therefore not related to landside loading/unloading operations.

Advantageously the terminal system uses as the first cargo transferring device a crane positioned onto the first quay. These cranes are well known in the art. The one or more cranes take up cargo and/or containers from the deck of the container ship, lift it to a transferring height, translate the cargo across the first quay at the transferring height, and lower the cargo again to place it in a floating device moored at the first quay in the buffer zone. According to the invention it is possible to use all sorts of floating devices suitable for carrying loads, preferably large loads. These floating devices may be motorized or may use other means of propulsion. For instance they may be propelled by underwater rail systems or walking legs, or any other suitable means. It is preferred to provide as second cargo transferring device a raft manoeuvred by at least one motorized smaller vehicle. Such rafts are known per se and are, according to the invention, able to store up to 200 and more containers at a time. Containers may be 20 or 40 foot containers.

The motorized small vehicles are used to manoeuvre the raft from its moored position at the first quay to its moored position at the second quay of the terminal structure, and the other way round. Using a plurality of rafts with only one or a few motorized smaller vehicles is expedient, reduces maintenance, and increases the flexibility of operation.

An additional advantage of the system according to the invention is that it is no longer necessary to provide the cargo in the form of containers, which is necessary when using straddlers. Indeed the floating devices may be provided with additional devices for accepting cargo. It is for instance possible to provide one or more of the floating rafts with one or more tanks, in case the cargo consists of fluids such as crude oil. In this case it is no longer necessary to use a crane as first cargo transferring device. Instead a hose can be used as first cargo transferring device, which hose is directly connected to the fluid container on the container ship, and the tank on the floating device. The cargo may in this case simply be pumped form the container ship to the floating device.

An even more preferred system according to the invention does not use the first cargo transferring device at all. In such a preferred embodiment of the invention the first and second cargo transferring device is one and the same second cargo transferring device. According to this embodiment, there is provided a passage from the dock to the side of the first quay where a container ship is moored, the passage enabling the second cargo transferring device to directly make access to the container ship. When load has to be transferred to the container ship, the second cargo transferring device, loaded with cargo is manoeuvred close to the container ship moored at the first quay. The cargo is then transferred from the second cargo transferring device to the container ship, for instance by a small crane being provided on the deck of the container ship. In a more preferred embodiment the container ship is adapted to enable the second cargo transferring device to enter a section of the deck of the container ship. Thereto, the container ship has over at least part of its length and adjacent to said deck section a sidewall that may be reduced in height to under water level, to enable water entering this section of the deck. The second cargo transferring device may then, according to the invention, float into said portion of the deck of the container ship. When all transferring devices have been entered in this manner, the movable sidewall portion is returned to its original height, where after the water contained in said deck section is pumped out of the section, leaving the second cargo transferring devices on the deck. Obviously the same system may be used to unload container ships, provided with loaded second cargo transferring devices. In the above described embodiment a section of the deck is used to contain a plurality of second cargo transferring devices. However other parts of the container ship may also be used, such as parts of the hold of the container ship.

The present invention also relates to a terminal structure for the automatic computerized transfer, e. g., loading and unloading, of cargo between container ships, trucks, railroad cars, and storage. The terminal system and structure of the present invention reduces the amount of time required for a container ship to berth, to bunker (take on fuel), load supplies and to discharge and/or take on cargo, by effectively uncoupling the mooring and loading/unloading operation of the container ship, from the loading/unloading operation of cargo in the terminal area, by the use of a transitional buffer zone in the form of a dock. The terminal structure of the present invention is equipped to store or transfer the loaded and/or unloaded cargo automatically by using third cargo transferring devices, and is provided with at least one second quay. The second cargo transferring devices, either loaded or unloaded with cargo, may be moored at these second quays of the terminal structure. The second quays may be build in the form of separation walls between a plurality of separate smaller docks adjacent to or part of the terminal building, which separate smaller docks are part of the buffer dock according to the invention. Preferably, each of the docks in the terminal and system of the present invention has the capability of acting as a wet dock, a graving dock and/or a lock for the second cargo transferring devices. An overhead transverse beam system permits an individual third cargo transferring device to lift a piece of cargo up and away from a second cargo transferring device, moored in the dock at the second quay. The third cargo transferring device then distributes the cargo to the pertinent transportation vehicle or to storage within the terminal.

A terminal system for unloading containers from and loading containers onto container ships is disclosed in US-B-6524050, comprising a terminal structure having an open front side with at least one quay adapted to form at least one dock. The docks are adapted to berth a complete container ship and is used to load/unload, to service and to preserve the container ship berthed in it. They are thereto provided with caisson doors. Although the system described in US-B-6524050 uses docks close to a terminal structure, these docks are adapted to contain the container ships themselves. A special bow mooring system using positioning assemblies is necessary to be able to moor the container ships in said docks. Also the water level in the docks has to be controlled independently to adjust the height of the container ships to the height of the terminal structure.

According to the invention the terminal system uses a terminal structure comprising a plurality of parallel walls adjacent to the second quay, a plurality of parallel elevated ground conveyance rails positioned atop at least one of the walls, and at least one third cargo transferring device adapted to be capable of travelling along the elevated ground conveyance rails and pick up, carry and deposit a cargo between the second cargo transferring device moored at the second quay, and a location other than the second quay.

The terminal system according to the invention may further comprise a computer control system for controlling the operations of each third cargo transferring device, and to adjust in time the operations of the first and second cargo transferring device.

In addition the terminal structure may further comprise a storage and transfer area containing railroad tracks, such that said third cargo transferring device or devices can transfer cargo between one or more second cargo transferring devices and a railroad car positioned on said railroad tracks, and/or a storage area within said storage and transfer area under computerized control. In this embodiment, the terminal system preferably further comprises a railroad access to said terminal structure for connection to said railroad tracks in said storage and transfer area.

The terminal system according to the invention may further comprise a terminal structure having a storage and transfer area containing a roadway, such that said third cargo transferring device can transfer cargo between one second cargo transferring device and a truck on said roadway, and/or a storage area within said storage and transfer area under computerized control. Preferably the terminal system further comprises a truck access to said terminal structure for connection to said roadway in said storage and transfer area. Obviously the transfer structure according to the invention may comprise several of the above described access roadways or railroad tracks, or combinations of both. It is also possible to provide the terminal structure with water ways or channels.

The second cargo transferring devices may be self propelling but are advantageously manoeuvred by independent small motorized vehicles. In a preferred embodiment of the system according to the invention remotely controlled docking modules are provided for moving the second cargo transferring devices in the transitional buffer zone.

The terminal system may further comprise a computer control system for controlling the operations of each of the third cargo transferring devices.

When more than one dock is included in the terminal system, inter quay transfer beams may be included for expediently conveying cargo from dock to dock, if required.

In addition, the terminal structure may further comprise a storage and transfer area adjacent to the docks containing railroad tracks and/or a roadway, so that the terminal system can transfer cargo, for instance in the form of containers between a first second cargo transferring device berthed in one of the docks, a second cargo transferring device berthed in a second dock, a railroad car on the railroad tracks, a truck on the roadway, and/or a storage area within the storage and transfer area by utilizing transverse overhead conveyance beams extending between the different docks in addition to the overhead conveyance beams extending perpendicular to the row of adjacent docks, eventually under computerized control.

Furthermore, the terminal system may include an enclosed terminal structure to accommodate all-weather, year-round operation, which terminal system further comprises at least over part of its surface a roof on the terminal structure and means for removing emissions from within the terminal structure, for example as a result of a fire. It is customary to provide containers with some kind of preserving gas under slight pressure. Parts of the terminal structure provided with a roof and with means to remove emissions are advantageously used to degas the containers. Also in the case of a fire or outbreak of obnoxious gasses, parts of the terminal structure may be quickly isolated form other parts of the terminal by closing the roof. By providing a plurality of parallel walls in the terminal structure of the invention adequate protection against explosions is provided.

The docks of the terminal structure may be provided with caisson doors (which may be attached to at least one of the docks) which open and close, and when closed isolate the dock from the adjoining buffer dock to allow (partly) dewatering of the dock for dry docking a second cargo transferring device, or to store such a device for repair.

As an additional aspect of the present invention, the third cargo transferring devices may be provided with means to read information present on the cargo and/or cargo containers. To this end several systems may be used such as optical systems, reading information labels put on the cargo, and/or systems based on radio frequency tagging. A system on the basis of radio frequency tagging or identification (RFID) typically comprises an emitting antenna, which is able to communicate via radio frequency waves with a resonance label, attached to a piece of cargo. Dependent on the information stored on the resonance label the label returns a signal to a receiving antenna in direct contact with a central computer, which can send the appropriate signal to the third cargo transferring device. In this way for instance, operation of the terminal can be highly automated and carry on during night hours, when human attendance is minimal.

The above description, features and advantages of the present invention will now be described in more detail with reference to the following figures, without however being restricted to this detailed description.
Fig.1 is a schematic view in perspective of an embodiment of the storage system according to the present invention;

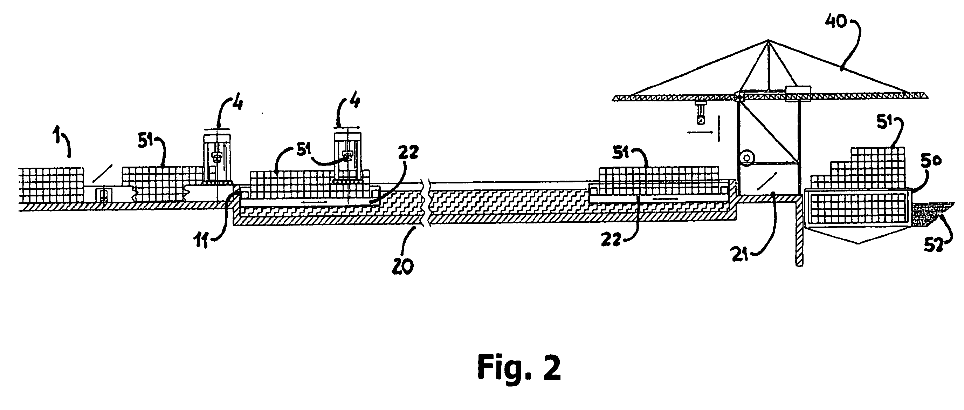

Fig. 2 is a schematic sectional view (from the side) of an embodiment of the storage system according to the invention;
Fig. 3A is a schematic top plan view of the storage system according to the invention, emphasizing the transitional buffer zone;
Fig. 3B is a schematic top plan view of the storage system according to the invention, emphasizing the storage terminal structure;
Fig. 4A is a schematic top plan view of a second cargo transferring device;
Fig. 4B is a schematic side view of a second cargo transferring device;
Fig. 5A is a schematic sectional view (from the side) of an embodiment of the storage system according to the invention;
Fig. 5B is a schematic sectional view (from the side) of an embodiment of the storage system according to the invention;
Fig. 6 finally is a schematic view in perspective of another preferred embodiment of the system showing rafts storable on container ships.

Similar reference characters are used in the several figures to denote corresponding features.

Referring now to the drawings the terminal storage system for unloading cargo from and loading cargo onto container ships, comprises a first quay 21 adapted to moor one or more container ships 50, at least one first cargo transferring device 40 adjacent to said first quay 21 and capable of transferring cargo 51 from and/or to said container ship 50 respectively to and/or from a transitional buffer zone 20 adjacent to the first quay 21 for temporarily storing the cargo 51. According to the invention there is also provided at least one second cargo transferring device 22 for transferring cargo 51 from and/or to the buffer zone 20 respectively to and/or from a terminal structure 1 for storing the cargo 51. The transitional buffer zone 20 comprises a dock 20, which substantially extends between the first quay 21 and at least one second quay 11 of the terminal structure 1, and which is adapted to receive the second cargo transferring device 22, which second cargo transferring device comprises a floating device 22 adapted to accept cargo 51 and float back and/or forth between the first quay 21 and the second quay 11.

Essential is that the terminal storage system makes use of a buffering dock 20, which is constructed separate from the waterway 52 onto which container ships 50 normally sail and navigate. Therefore container ships 50 are not to enter the buffering dock 20. On the other hand, according to the invention, floating devices 22 may go onto waterway 52, through a suitable ship lock 53, which connects buffering dock 20 to waterway 52.

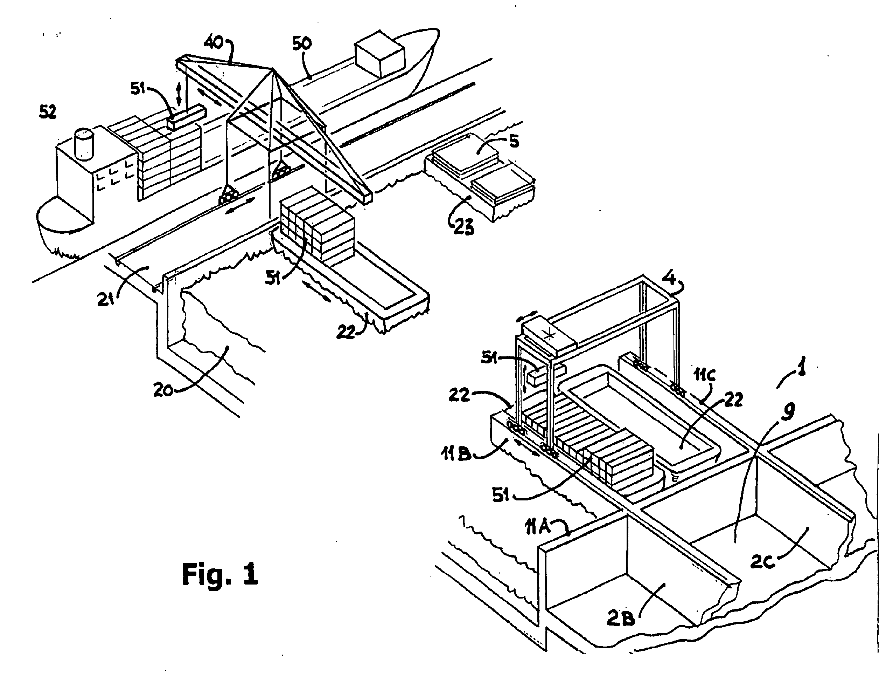

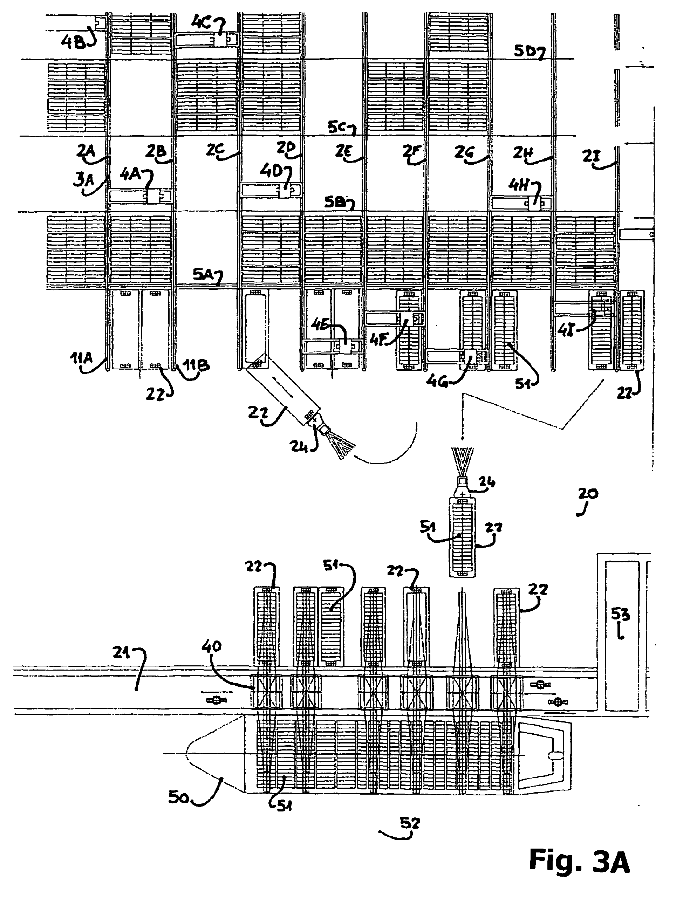

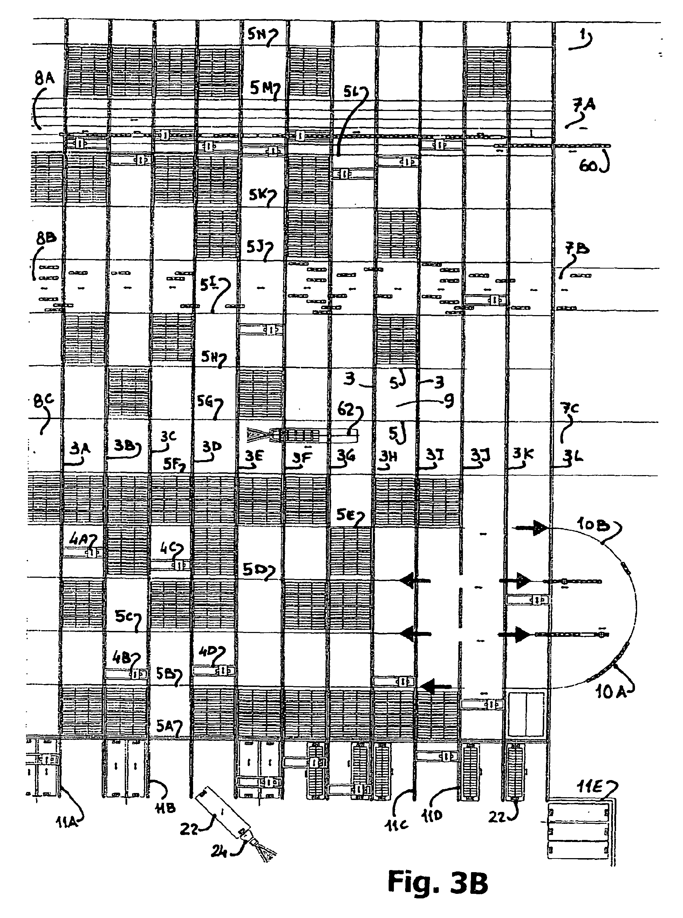

The terminal system further comprises a terminal structure 1, located at another side of the buffering dock 20, for instance opposite to first quay 21. The terminal structure 1 comprises a second quay 11, onto which floating devices 22 may be moored. Second quay 11 may be one elongated quay, substantially parallel to the first quay 21, and/or may consist of a plurality of quays 11A, 11B, 11C,..., as shown on figures 1, 3A and 3B. The terminal structure moreover comprises a plurality of parallel walls 2A, 2B, 2C,... adjacent to the second quay 11 and/or quays 11A, 11B, 11C,... and a plurality of parallel elevated ground conveyance rails 3A, 3B, 3C,... or suitable receptacles for wheels, positioned atop the walls 2A, 2B, 2C,.... At least one third cargo transferring device 4 adapted to be capable of travelling along the elevated ground conveyance rails 3A, 3B, 3C,... picks up, carries and deposits cargo 51 between the second cargo transferring device 22 moored at the second quay 11 and/or quays 11A, 11B, 11C,..., and a location other than the second quay inside terminal 1.

In a preferred embodiment the terminal operations are controlled by a central computer system (not shown) housed in control station.

Each dock 20 may include caisson doors and means for dry-docking the floating devices 22 for longer periods, such as when repair is needed or cargo needs to be stored on the floating devices for longer periods.

Individual containers 51 are shown being transported by third cargo transport vehicles 4A, 4B, 4C,... on the automated overhead beam and elevated ground rail transfer system. The transfer system preferably also comprises a plurality of transversely spaced longitudinal assemblies, for instance overhead transverse beam assemblies 5A, 5B, 5C,... onto which loads may be transferred by so called speed shifters or other transferring means known by the skilled person. The storage terminal may be provided with roofing if necessary. Off course transverse beams 5A, 5B, 5C,... should be positioned such that the movement of third cargo transferring devices 4A, 4B, 4C,... over longitudinal rail assemblies 3A, 3B, 3C,... is not inhibited.

Roofing may be used to at least partly cover the terminal structure. In this way several storage terminals roughly enclosing the area between two consecutive longitudinal and transverse beams, can be made contained. This is important in case of hazardous cargo, because this cargo can then be separated from the rest of the terminal structure

Terminal 1 has an entrance area, generally designated 7, and an exit area, generally designated 8, for incoming and outgoing railcars 60 (7a and 8a), and/or trucks 61 (7b and 8b) and/or possibly also ships 62 (7c and 8c), to and from the storage terminal structure. Many design choices can be made regarding the entrance and exit roads, tracks, and waterways. One possible solution is shown in Fig. 3B. The same holds for the first quay 12.

The terminal shown in Fig. 3A and B is exemplary of one of several possible forms, including the type and shape of the roof and sidewalls, the number of docks included therein, and the optional use of encapsulated dredge material for terminal construction.

By providing a separate buffering dock 20 in the terminal system according to the invention, in combination with the use of second transferring devices 22 with standardized dimensions, the need to have difficult water level adjustment systems is avoided. Indeed the adjustment of the difference in height between the cargo 51 on the second transferring device 22 and the overhead beam assembly 3A, 3B, 3C, ... is normally done by pumping water into or out of the docks 22. The raising of second cargo transferring devices 22 relative to the overhead transverse beam assemblies 3A, 3B, 3C, ... can now be carried out expediently and for all docks together and serves to minimize the transfer distance, and thus the transfer time between the third cargo transferring devices 4A, 4B, 4C, ... and the second transferring devices 20. A central computer system is preferably provided to control, inter alia, the transfer of water into and out of dock 20 to optimise cargo movements between the third cargo transferring devices 4A, 4B, 4C, ... and the second transferring devices 20.

Fig. 1 shows a general overview of the terminal storage system according to the invention. Cargo 51 is loaded onto and/or unloaded from container ships 50 coming from waterway 52 and moored at the first quay 21. At least one floating device 22, able to float in buffering dock 20 is provided adjacent to the first quay 21 and sufficiently close to the mooring position of the container ship 50. After making cargo 51 approachable by for instance removing deck covering elements 54 from ship 50, cargo 51 is transferred from container ship 50 to floating device 22 in dock 20 with the first cargo transferring device 40 to temporarily store the cargo 51 onto floating device 22. First cargo transferring device 40 may for instance be a bridge crane, adapted to translate along first quay 21. Preferably floating device 22 is loaded with cargo 51 up to substantially its loading limit. The cargo 51 is then transferred from the first quay 21 to the second quay 11 or quays 11A, 11B, 11C, ... in the terminal structure 1 with the aid of the floating device 22. To unload the cargo 51 at the terminal structure 1, floating device 22 is preferably moored at the second quay 11, where after cargo 51 is picked-up from floating device 22 by the third cargo transferring device 4, and transferred to a location in the terminal structure 1 other than the second quay 11. The third cargo transferring device 4 may for instance be a gantry crane and/or gallows frame derrick on rails and/or provided with wheels, adapted to translate onto walls 2A, 2B, 2C, ...

Obviously the same storage system may be used in the other direction. In this case cargo 51 is loaded onto container ships 50 by transferring the cargo 51 from a location in the terminal structure 1 other than the second quay 11 or quays 11 A, 11B, 11C, ... to the second quay 11 (or quays) with the third cargo transferring device 4, followed by the steps of loading the cargo 51 onto a floating device 22 moored at the second quay 11, transferring the cargo 51 from the second quay 11 to the first quay 21 by floating the floating device 22 in the dock 20, mooring the floating device 22 adjacent to the first quay 21 and sufficiently close to the position of a container ship 50, moored at first quay 21, and transferring cargo 51 from said floating device 22 to said container ship 50, through first cargo transferring device 40.

To temporarily store deck covering elements 54 a separate floating device 23 may be provided in buffering dock 22.

It is also possible to load a floating device 22 with cargo 51 before a ship 50 which has to receive the cargo 51 has actually arrived and/or been moored at first quay 21. Floating device 22 then acts to buffer the cargo 51 for an extended period, and may be stored in some particular location of the buffering dock 20, as shown in Fig. 3B, along second quay 11E. Floating device 22 may also be transportable outside buffering dock 22, through a ship lock 53, which connects buffering dock 20 to waterway 52, as shown in Fig. 3A. Ship lock 53 may also be used to let in and/or let out of buffering dock 20 any other floating device, such as for instance a floating crane for repair or maintenance works.

Floating devices 22 may be self-propelling or they may be propelled by separate motorized smaller vehicles 24.

As shown in Fig. 1 the gantry crane 4 or the like is able to translate to above a raft 22, moored at quay 11, by moving onto the walls of the quays 11. After cargo 51 has been picked-up from raft 22, crane 4 translates onto walls 2 in a substantial linear fashion to another part of the terminal structure. The area enclosed by walls 2A, 2B, 2C, ... and 5A, 5B, 5C, ... form a plurality of storage areas 9 (9A, 9B, 9C, ...) for cargo 51.

It is also possible to use the first quay 21 or separate roadways to bring cargo 51, by for instance train, truck, straddle-carriers, and so on, in the vicinity and/or under bridge crane 40, and/or to transport personnel, separate cargo, etc. to ships 50.

The central computer system may create and continuously update a viable loading plan for each ship 50 and/or floating device 22, and may also be capable of continuously adjusting the loading plan in accordance with input data regarding the timeliness of cargo not yet arrived in terminal structure 1, and accurately monitors the locations of all incoming and outgoing containers 51 in terminal 1. The central computer system may also program and control the movements of all third cargo transport cranes 4 and speed-shifter, and maintains an optimum water level in buffering dock 20 by operating ship lock 53.

Fig. 3 is a schematic top plan view of the terminal structure 1 depicting the buffering dock 20, quays 11, gantry cranes 4, longitudinal walls 3 and transverse walls 5, which together enclose storage areas 9. In order to enable to expediently carry cargo 51 from one longitudinal row between adjacent walls 5, to another longitudinal row, so called shifters or speed-shifters 10A may be advantageously used. These small trains, running on suitable tracks 10B are well known in the art. To quickly change from one transverse row between adjacent walls 3, to another transverse row, tracks 10B may be made semi-circular, such as shown at the right of Fig. 3B.

Storage areas 9 may be open or covered with roofing, which may be provided with hinges to make it hingable. A separate area 9, preferably closable on all sides from the outside, may be provided to degas cargo 51, or to provide cargo with gas.

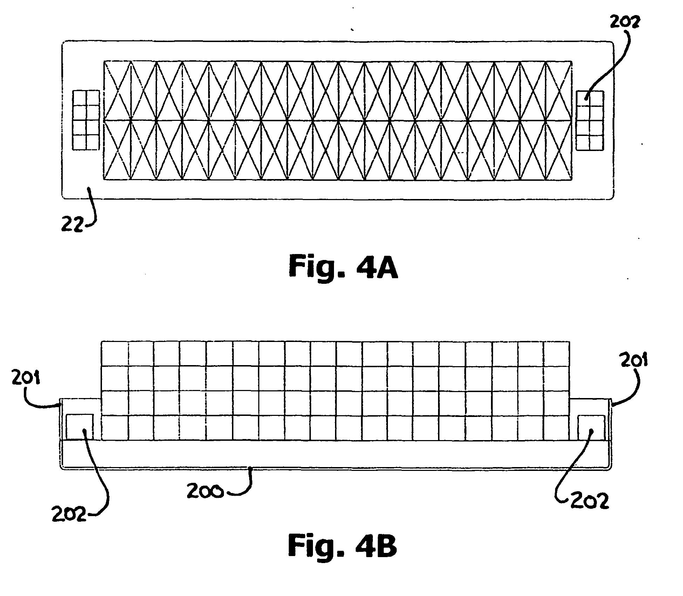

A suitable floating device 22 is shown in Fig. 4A and 4B. It generally consists of a floating surface 200, with dimensions adapted to receive a plurality of cargo 51. It may have sidewalls 201, if necessary removable, to prevent the cargo 51 to slide of. Separate areas may be provided on the raft 22, for instance to store twist locks or the like. It may typically contain about 120 - 160 cargo containers 51, which may be standard 20 and/or 40 foot containers, well known in the art. Typical dimensions of the floating device 22 are from about 30 m wide to more than 150 m long, although dimensions may be substantially smaller or larger. A typical raft 22 may contain up to 120-160 standard containers. Depending on the capacity of the different cargo transferring devices, containers 51 may be presented in predefined packages (so called bays) and loaded and/or unloaded in bays. Floating devices 22 may also be adapted to receive other forms of cargo 51, such as for instance liquids, gasses, or other non-contained cargo. Floating device 22 may for instance be provided with tank containers or the like.

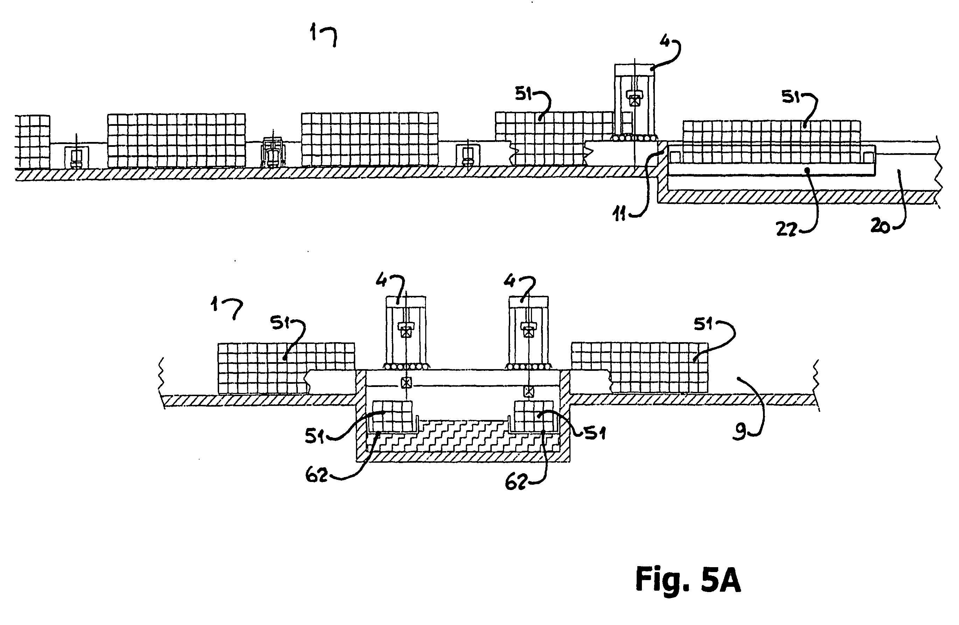

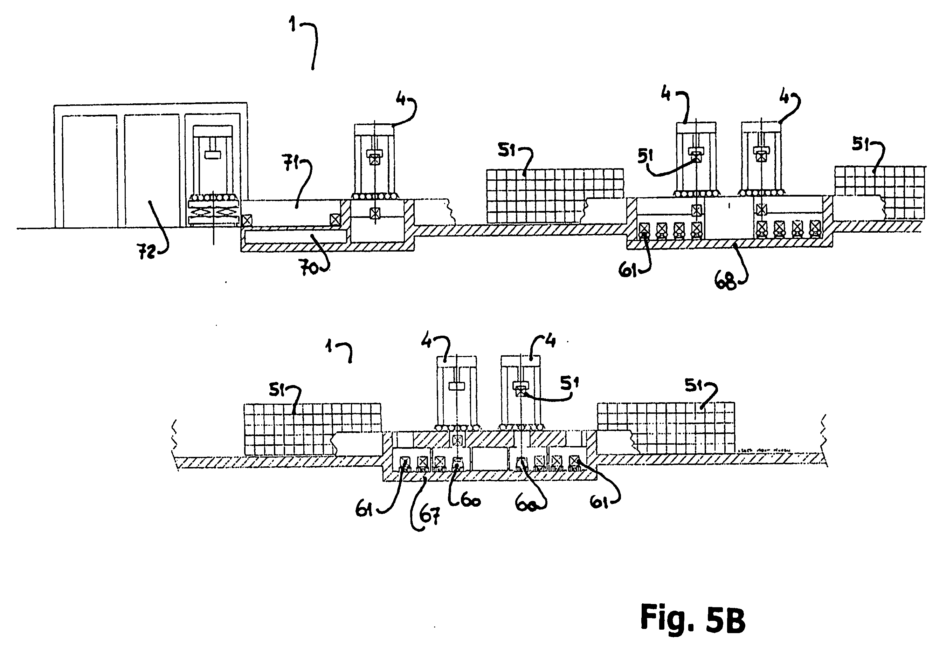

Fig. 5A and B schematically show a sectional view of a side portion of container storage area 1. Fig. 5B illustrates how a truck access lane 67 and/or a train access lane 68 is provided onto a lower level than the level on which gantry cranes 4 are translating back and forth. The elevated gantry crane level above train or truck access lanes 67, 68 allows to transfer a cargo container 51 on railcar 61 and/or truck 60 by lowering it to the access lane level. Likewise a cargo container 51 may be picked-up by gantry crane 4 from railcar 61 and/or truck 60 by elevating it to the gantry crane level. In this way the different transporting devices do not hinder each other in their respective motions.

Obviously, terminal structure 1 may be provided with dedicated areas and offices 70, such as for customs, and areas 71 to put cargo into quarantine, and/or areas 72 to service gantry cranes and other equipment.

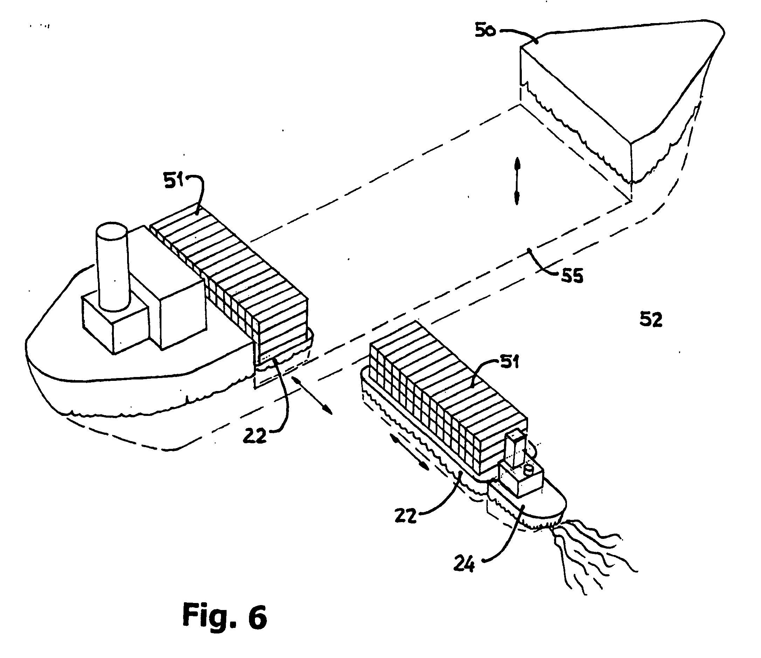

Figure 6 illustrates another preferred embodiment of the system and method according to the invention. This embodiment does not use the first cargo transferring device 40 at all. According to this embodiment, there is provided a passage from the dock 22 to the waterside 52, for instance ship lock 53. This passage 53 enables the second cargo transferring device 22 to directly make access to the container ship 50. When load 51 has to be transferred to the container ship 50, the second cargo transferring device 22, loaded with cargo 51 is manoeuvred close to the container ship 50 moored at the first quay 21 or at some other position in waterway 52. The cargo 51 is then directly transferred to the container ship 50. Container ship 50 is thereto adapted to enable the second cargo transferring device 22 to enter a section of the deck of the container ship 50, such as shown in Fig. 6. Thereto, the container ship 50 has over at least part of its length and adjacent to said deck section a sidewall portion 55, which is or may be reduced in height to under water level, to enable water entering this section of the deck. The second cargo transferring device 22 may then, according to the invention, float into said portion of the deck of the container ship 50. When all transferring devices 22 have been entered in this manner, the - possibly movable - sidewall portion 55 is returned to its original height, where after the water contained in said deck section is pumped out of the section, leaving the second cargo transferring devices 22 on the deck. It is also possible to provide the ship 50 with a permanently lowered sidewall portion 55, which is lowered under water level and hissed above water level by lowering and hissing the whole ship 50 or portions thereof. Obviously the same system may be used to unload container ships 50, provided with loaded second cargo transferring devices 22. In the above described embodiment a section of the deck is used to contain a plurality of second cargo transferring devices. However other parts of the container ship may also be used, such as parts of the hold of the container ship.

## Claims

1. A terminal storage system for unloading cargo (51) from and loading cargo (51) onto container ships (50), comprising a first quay (21) adapted to moor at least one container ship (50); at least one first cargo transferring device (40) adjacent to said first quay (21) and capable of transferring cargo (51) from and/or to said container ship (50) respectively to and/or from a transitional buffer zone (20) adjacent to the first quay (21) for temporarily storing the cargo; and at least one second cargo transferring device (22) for transferring cargo (51) from and/or to the buffer zone (20) respectively to and/or from a terminal structure (1) for storing the cargo (51), **characterised in that** the transitional buffer zone comprises a dock (20), which dock substantially extends between the first quay (21) and at least one second quay (11) of the terminal structure (1), which dock (20) is separate from the waterway (52) onto which said container.ships (50) are moored, and which dock (20) is adapted to receive the second cargo transferring device (22), which second cargo transferring device comprises a floating device (22) adapted to accept cargo and float between the first and second quays.

2. A terminal system according to claim 1, **characterised in that**, the first cargo transferring device comprises a crane (40) positioned onto the first quay (21).

3. A terminal system according to claim 1 or 2, **characterised in that** the second cargo transferring device is a raft (22) manoeuvred by at least one motorized smaller vehicle (24).

4. A terminal system according to any one of claims 1 to 3, **characterised in that** the first and second cargo transferring device is one and the same second cargo transferring device (22).

5. A terminal system according to any one of claims 1 to 4, **characterised in that** the terminal structure (1) comprises a plurality of parallel walls (2A-21) adjacent to the second quay (11), a plurality of parallel elevated ground conveyance rails (3A-31) positioned atop at least one of the walls, and at least one third cargo transferring device (4A-41) adapted to be capable of travelling along the elevated ground conveyance rails (3A-31) and pick up, carry and deposit a cargo (51) between the second cargo transferring device (22) moored at the second quay (11), and a location other than the second quay.

6. The terminal system of any one of the preceding claims, further comprising a computer control system for controlling the operations of each third cargo transferring device (4A-4l).

7. The terminal system of any one of the preceding claims, wherein said terminal structure (1) further comprises a storage and transfer area containing railroad tracks (68), and whereby said third cargo transferring device (4A-41) can transfer cargo (51) between one second cargo transferring device (22) and a railroad car (61) on said railroad tracks (68), and/or a storage area within said storage and transfer area under computerized control.

8. The terminal system of claim 7, further comprising a railroad access (7A) to said terminal structure (1) for connection to said railroad tracks (68) in said storage and transfer area.

9. The terminal system of any one of the preceding claims, wherein said terminal structure (1) further comprises a storage and transfer area containing a roadway (67), and whereby said third cargo transferring device (4A-41) can transfer cargo (51) between one second cargo transferring device (22) and a truck (60) on said roadway (67), and/or a storage area within said storage and transfer area under computerized control.

10. The terminal system of claim 9, further comprising a truck access (7B) to said terminal structure for connection to said roadway (67) in said storage and transfer area.

11. A terminal system according to any one of the preceding claims, further comprising remotely controlled docking modules (24) for moving the second cargo transferring devices (22) in the transitional buffer zone (20).

12. A method for unloading cargo from container ships using the system according to any one of claims 1 to 11, comprising the steps of mooring at least one container ship (50) at the first quay (21); providing a floating device (22) adjacent to the first quay (21) sufficiently close to the mooring position of the container ship (50), transferring cargo (51) from said container ship (50) to said floating device (22) in the dock (20) with the first cargo transferring device (40) to temporarily store the cargo (51), transferring the cargo (51) from the first quay (21) to the second quay (11) in the terminal structure (1) with the aid of the floating device (22), mooring the floating device (22) at the second quay (11), unloading the cargo (51) with a third cargo transferring device (4A-41), and transferring the cargo (51) to a location in the terminal structure(1) other than the second quay (11).

13. A method for loading cargo to container ships using the system according to any one of claims 1 to 11, comprising the steps of transferring the cargo (51) from a location in the terminal structure (1) other than the second quay (11) to the second quay (11) with a third cargo transferring device (4A-4I); loading the cargo (51) onto a floating device (22) moored at the second quay (11); transferring the cargo (51) from the second quay (11) to the first quay (21) by floating the floating device (22) in the dock (21); mooring the floating device (22) adjacent to the first quay (21) sufficiently close to the position of a moored container ship (50); and transferring cargo (51) from said floating device (22) in the dock (21) to said container ship (50).

## Patentansprüche

1. Terminal-Lagervorrichtung für die Entladung von Fracht (51) von und die Beladung von Fracht (51) auf Containerschiffe (50), umfassend einen ersten Kai (21), der geeignet ist, mindestens ein Containerschiff (50) festzumachen; mindestens eine erste Vorrichtung zur Überführung von Fracht (40), die mit dem ersten Kai (21) benachbart ist und in der Lage ist, Fracht (51) vom und/oder auf das Containerschiff (50) beziehungsweise in eine und/oder von einer Zwischenpufferzone (20), die mit dem ersten Kai (21) benachbart ist, zu überführen, um die Fracht vorübergehend zu lagern; sowie mindestens eine zweite Vorrichtung zur Überführung von Fracht (22) zur Überführung von Fracht (51) von und/oder zu der Pufferzone (20) beziehungsweise zu und/oder von einer Terminalkonstruktion (1) zur Lagerung der Fracht (51), **dadurch gekennzeichnet, dass** die Zwischenpufferzone ein Dock (20), das sich im Wesentlichen zwischen dem ersten Kai (21) und mindestens einem zweiten Kai (11) der Terminalkonstruktion erstreckt, umfasst, wobei das Dock (20) vom Wasserweg (52), auf dem die Containerschiffe (50) festgemacht sind, getrennt ist, und wobei das Dock (20) geeignet ist, die zweite Vorrichtung zur Überführung von Fracht (22) aufzunehmen, wobei diese zweite Vorrichtung zur Überführung von Fracht eine schwimmende Vorrichtung (22) umfasst, die geeignet ist, Fracht aufzunehmen und zwischen dem ersten und dem zweiten Kai hin und her zu treiben.

2. Terminalvorrichtung nach Anspruch 1, **dadurch gekennzeichnet, dass** die erste Vorrichtung zur Überführung von Fracht einen Kran (40) umfasst, der auf dem ersten Kai (21) angeordnet ist.

3. Terminalvorrichtung nach Anspruch 1 oder 2, **dadurch gekennzeichnet, dass** die zweite Vorrichtung zur Überführung von Fracht ein Floß (22) ist, das durch mindestens ein kleineres motorisiertes Fahrzeug (24) angetrieben wird.

4. Terminalvorrichtung nach einem der Ansprüche 1 bis 3, **dadurch gekennzeichnet, dass** die erste und die zweite Vorrichtung zur Überführung von Fracht ein- und dieselbe zweite Vorrichtung zur Überführung von Fracht (22) ist.

5. Terminalvorrichtung nach einem der Ansprüche 1 bis 4, **dadurch gekennzeichnet, dass** die Terminalkonstruktion (1) mehrere parallele Mauern (2A-21) umfasst, die mit dem zweiten Kai (11) benachbart sind, mehrere parallele erhöhte Bodenbeförderungsschienen (3A-3l), die oben auf mindestens einer der Mauern angeordnet sind, und mindestens eine dritte Vorrichtung zur Überführung von Fracht (4A-41), die geeignet ist, auf den erhöhten Bodenbeförderungsschienen (3A-31) zu laufen und eine Fracht (51) zwischen der zweiten Vorrichtung zur Überführung von Fracht (22), die am zweiten Kai (11) festgemacht ist und einem anderen Ort als dem zweiten Kai aufzunehmen, zu befördern und abzulegen.

6. Terminälvorrichtung nach einem der vorhergehenden Ansprüche, des Weiteren umfassend eine computergesteuerte Vorrichtung zur Steuerung des Betriebs jeder dritten Vorrichtung zur Überführung von Fracht (4A-41).

7. Terminalvorrichtung nach einem der vorhergehenden Ansprüche, wobei die Terminalkonstruktion (1) des Weiteren einen Lager- und Überführungsbereich umfasst, der Eisenbahnschienen (68) enthält, und wodurch die dritte Vorrichtung zur Überführung von Fracht (4A-4I) Fracht (51) zwischen einer zweiten Vorrichtung zur Überführung von Fracht (22) und einem Eisenbahnwaggon (61) auf den Eisenbahnschienen (68) überführen kann, und/oder einen Lagerbereich innerhalb des computergesteuerten Lager- und Überführungsbereichs.

8. Terminalvorrichtung nach Anspruch 7, des Weiteren umfassend einen Eisenbahnzugang (7A) zu der Terminalkonstruktion (1) für die Verbindung zu den Eisenbahnschienen (68) in dem Lager- und Überführungsbereich.

9. Terminalvorrichtung nach einem der vorhergehenden Ansprüche, wobei die Terminalkonstruktion (1) des Weiteren einen Lager- und Überführungsbereich umfasst, der eine Fahrbahn (67) enthält, und wodurch die dritte Vorrichtung zur Überführung von Fracht (4A-4I) Fracht (51) zwischen einer zweiten Vorrichtung zur Überführung von Fracht (22) und einem Lastkraftwagen (60) auf der Fahrbahn (67) überführen kann, und/oder einen Lagerbereich innerhalb des computergesteuerten Lager- und Überführungsbereichs.

10. Terminalvorrichtung nach Anspruch 9, des Weiteren umfassend einen Zugang für Lastkraftwagen (7B) zu der Terminalkonstruktion für die Verbindung mit der Fahrbahn (67) in dem Lager- und Überführungsbereich.

11. Terminalvorrichtung nach einem der vorhergehenden Ansprüche, des Weiteren umfassend ferngesteuerte Andockmodule (24) für die Verschiebung der zweiten Vorrichtungen zur Überführung von Fracht (22) in die Übergangspufferzone (20).

12. Verfahren zur Entladung von Fracht von Containerschiffen, die die Vorrichtung nach einem der Ansprüche 1 bis 11 benutzen, umfassend Schritte zum Festmachen von mindestens einem Containerschiff (50) am ersten Kai (21); hierbei wird eine Schwimmvorrichtung (22), die mit dem ersten Kai (21) benachbart ist, bereitgestellt, die sich in ausreichender Nähe zum Ort des Festmachens des Containerschiffs (50) befindet, das Fracht (51) vom Containerschiff (50) auf die Schwimmvorrichtung (22) im Dock (20) mit der ersten Vorrichtung zur Überführung von Fracht (40) überführt, um die Fracht (51) vorübergehend zu lagern, wobei die Fracht (51) vom ersten Kai (21) auf den zweiten Kai (11) in der Terminalkonstruktion (1) mit Hilfe der Schwimmvorrichtung (22) überführt wird, wobei die Schwimmvorrichtung (22) am zweiten Kai (11) festgemacht, die Fracht (51) mit einer dritten Vorrichtung zur Überführung von Fracht (4A-41) entladen und die Fracht (51) zu einem anderen Ort in der Terminalkonstruktion (1) als der zweite Kai (11) überführt wird.

13. Verfahren zur Verladung von Fracht auf Containerschiffe, wobei die Vorrichtung nach einem der Ansprüche 1 bis 11 benutzt wird, die die Schritte der Überführung der Fracht (51) von einem anderen Ort in der Terminalkonstruktion (1) als der zweite Kai (11) zu dem zweiten Kai (11) mit einer dritten Vorrichtung zur Überführung von Fracht (4A-41); Verladung der Fracht (51) auf eine Schwimmvorrichtung (22), die an dem zweiten Kai (11) festgemacht ist; Überführung der Fracht (51) vom zweiten Kai (11) zum ersten Kai (21), indem die Schwimmvorrichtung (22) im Dock (21) getrieben wird; Festmachen der Schwimmvorrichtung (22) in mit dem ersten Kai (21) benachbart ist, der sich in ausreichender Nähe zu der Stelle eines festgemachten Containerschiffes (50) befindet; und Überführung von Fracht (51) von der Schwimmvorrichtung (22) im Dock (21) auf das Containerschiff (50) umfasst.

## Revendications

1. Système de stockage de terminal pour décharger des marchandises (51) de navires porte-conteneurs (50) et pour charger des marchandises (51) sur des navires porte-conteneurs (50) comprenant un premier quai (21) adapté pour amarrer au moins un navire porte-conteneurs (50), au moins un premier dispositif de transfert (40) de marchandises adjacent audit premier quai (21) et capable de transférer des marchandises (51) respectivement à partir dudit navire porte-conteneurs (50) et vers ledit navire porte-conteneurs (50) et / ou à partir d'une zone tampon de transition (20) et vers une zone tampon de transition (20) adjacents au premier quai (21) pour stocker temporairement les marchandises, et au moins un deuxième dispositif de transfert de marchandises (22) pour transférer des marchandises (51) respectivement de la zone tampon (20) vers une structure de terminal (1) et / ou d'une structure de terminal (1) vers la zone tampon (20), **caractérisé en ce que** la zone tampon de transition comprend un dock (20), lequel dock s'étend en substance entre le premier quai (21) et au moins un deuxième quai (11) de la structure de terminal (1), lequel dock (20) est séparé de la voie navigable (52) sur laquelle lesdits navires porte-conteneurs (50) sont amarrés, et lequel dock (20) est adapté pour recevoir le deuxième dispositif de transfert (22) de marchandises, lequel deuxième dispositif de transfert de marchandises comprend un dispositif flottant (22) adapté pour accepter des marchandises et flotter entre les premier et deuxième quais.

2. Système de terminal selon la revendication 1, **caractérisé en ce que** le premier dispositif de transfert de marchandises comprend une grue (40) positionnée sur le premier quai (21).

3. Système de terminal selon la revendication 1 ou 2, **caractérisé en ce que** le deuxième dispositif de transfert de marchandises est un radeau (22) manoeuvré par au moins un plus petit véhicule motorisé (24).

4. Système de terminal selon une quelconque des revendications 1 à 3, **caractérisé en ce que** le premier et deuxième système de transfert de marchandises est un seul et même deuxième dispositif de transfert (22) de marchandises.

5. Système de terminal selon une quelconque des revendications 1 à 4, **caractérisé en ce que** la structure de terminal (1) comprend une pluralité de murs parallèles (2A - 2l) adjacents au deuxième quai (11), une pluralité de rails de transport parallèles en hauteur (3A - 3I) positionnés sur le dessus d'au moins un des murs, et au moins un troisième dispositif de transfert (4A - Al) de marchandises adapté pour être capable de se déplacer le long des rails de transport en hauteur (3A - 31) et prendre, transporter et déposer des marchandises (51) entre le deuxième dispositif de transfert (22) de marchandises amarré au deuxième quai (11) et un endroit autre que le deuxième quai.

6. Système de terminal selon une quelconque des revendications précédentes, comprenant en outre un système de contrôle par ordinateur pour contrôler les opérations de chaque troisième dispositif de transfert (4A - Al) de marchandises.

7. Système de terminal selon une quelconque des revendications précédentes, dans lequel ladite structure de terminal (1) comprend en outre une zone de stockage et de transfert contenant des voies ferrées (68) et moyennant quoi ledit troisième dispositif de transfert (4A - Al) de marchandises peut transférer des marchandises (51) entre un deuxième dispositif de transfert (22) de marchandises et un wagon de chemin de fer (61) sur lesdites voies ferrées (68), et / ou une zone de stockage dans ladite zone de stockage et de transfert sous contrôle informatisé.

8. Système de terminal selon la revendication 7, comprenant en outre un accès pour chemin de fer (7A) à ladite structure de terminal (1) pour la connexion aux dites voies ferrées (68) dans ladite zone de stockage et de transfert.

9. Système de terminal selon une quelconque des revendications précédentes, dans lequel ladite structure de terminal (1) comprend en outre une zone de stockage et de transfert contenant une route (67) et moyennant quoi ledit troisième dispositif de transfert (4A - Al) de marchandises peut transférer des marchandises (51) entre un deuxième dispositif de transfert (22) de marchandises et un camion (60) sur ladite route (67), et / ou une zone de stockage dans ladite zone de stockage et de transfert sous contrôle informatisé.

10. Système de terminal selon la revendication 9, comprenant en outre un accès pour camion (7B) à ladite structure de terminal (1) pour la connexion à ladite route (67) dans ladite zone de stockage et de transfert.

11. Système de terminal selon une quelconque des revendications précédentes, comprenant en outre des modules de retenue (24) commandés à distance pour déplacer le deuxième dispositif de transfert (22) de marchandises dans la zone tampon de transition (20).

12. Méthode pour décharger des marchandises de navires porte-conteneurs utilisant le système selon une quelconque des revendications 1 à 11, comprenant les étapes consistant à amarrer au moins un navire porte-conteneurs (50) au premier quai (21), à prévoir un dispositif flottant (22) adjacent au premier quai (21) suffisamment proche de la position d'amarrage du navire porte-conteneurs (50), à transférer des marchandises (51) dudit navire porte-conteneurs (50) sur ledit dispositif flottant (22) dans le dock (20) avec le premier dispositif de transfert (40) de marchandises pour stocker temporairement les marchandises (51), à transférer les marchandises (51) du premier quai (21) sur le deuxième quai (11) dans la structure de terminal (1) à l'aide du dispositif flottant (22), à amarrer le dispositif flottant (22) au deuxième quai (11), à décharger les marchandises (51) avec un troisième dispositif de transfert (4A - 4I) et à transférer les marchandises (51) vers un endroit dans la structure de terminal (1) autre que le deuxième quai (11).

13. Méthode pour charger des marchandises sur des navires porte-conteneurs utilisant le système selon une quelconque des revendications 1 à 11, comprenant les étapes consistant à transférer les marchandises (51) d'un endroit dans la structure de terminal (1) autre que le deuxième quai (11) sur le deuxième quai (11) avec un troisième dispositif de transfert (4A - 41) de marchandises, à charger les marchandises (51) sur un dispositif flottant (22) amarré au deuxième quai (11), à transférer les marchandises (51) du deuxième quai (11) sur le premier quai (21) en déplaçant le dispositif flottant (22) dans le dock (21), à amarrer le dispositif flottant (22) de manière adjacente au premier quai (21) suffisamment près de la position d'un porte-conteneurs (50) amarré et à transférer les marchandises (51) dudit dispositif flottant (22) dans le dock (21) sur ledit navire porte-conteneurs (50).
